(19) Europäisches Patentamt
European Patent Office
Office européen des brevets

(11) Publication number: 0 066 307
A2

(12) # EUROPEAN PATENT APPLICATION

(21) Application number: 82200511.2

(22) Date of filing: 29.04.82

(51) Int. Cl.³: B 01 D 53/14
B 01 J 20/22

(30) Priority: 26.05.81 US 267195

(43) Date of publication of application:
08.12.82 Bulletin 82/49

(84) Designated Contracting States:
BE DE FR GB IT NL

(71) Applicant: SHELL INTERNATIONALE RESEARCH MAATSCHAPPIJ B.V.
Carel van Bylandtlaan 30
NL-2596 HR Den Haag(NL)

(72) Inventor: Blytas, George Constantin
14323 Apple Tree
Houston Texas 77079(US)

(72) Inventor: Diaz, Zaida
11606 Village Place
Houston Texas 77077(US)

(74) Representative: Puister, Antonius Tonnis, Mr. et al,
P.O. Box 302
NL-2501 CH The Hague(NL)

(54) **Process for the removal of acid gases from gaseous streams.**

(57) $H_2S$, $CO_2$ and COS are removed from a gas by oxidizing the $H_2S$ to sulphur in an absorbent mixture, separating a sweet gas from absorbent admixture containing $CO_2$, COS, S and reduced reactant, stripping $CO_2$ and COS from the admixture (from which sulphur may be removed and which may be regenerated), contacting the $CO_2$ and COS stripped off with a hydrolysis catalyst and removing $H_2S$ from the gas formed by the hydrolysis.

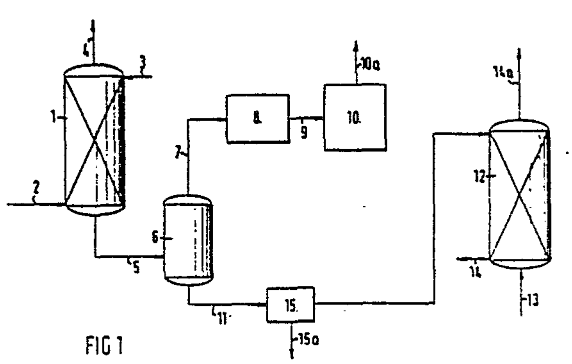


FIG 1

EP 0 066 307 A2

Croydon Printing Company Ltd

# PROCESS FOR THE REMOVAL OF ACID GASES FROM GASEOUS STREAMS

The invention relates to a process for the removal of $H_2S$, $CO_2$ and COS from a sour gaseous stream containing $H_2S$, $CO_2$ and COS.

The presence of significant quantities of $H_2S$ or $H_2S$ and $CO_2$ in various "sour" industrial gaseous streams poses a persistent problem. A gaseous stream is named "sour" if it contains significant quantities of $H_2S$ and/or $CO_2$.

Although various procedures have been developed to remove and recover these contaminants, most such processes are deficient, for a variety of reasons. An additional contaminant in $H_2S$- and $CO_2$-containing streams is carbonyl sulphide (COS). In particular, this contaminant poses problems in conventional solvent-absorption processes since it hydrolyzes slowly and cannot be released with the vent gas or with $CO_2$ recovered.

While some work has been done in the area of removal and conversion of $H_2S$ to sulphur by use of iron complexes in water gas streams, such processes generally are inapplicable directly to purification of hydrocarbon feedstock, coal gasification, or natural gas streams having high ratios of $CO_2$ to $H_2S$. For example, U.S. patent specification 3,266,320 discloses the removal of $H_2S$ from fluids passing through or leaving industrial processes by adding to the polluted streams certain chelates of polyvalent metals. The chelates are added in an amount which is stoichiometrically substantially less than the amount of the pollutant, and the chelate- and pollutant-containing stream is contacted with oxygen. The preferred chelates are the iron, cobalt, and nickel chelates of acetyl acetone, cyclopentadiene,

ethylenediaminetetraacetic acid, N-hydroxyethylethylenediaminetriacetic acid, gluconic acid, tartaric acid and citric acid. The chelate is said to catalyze the reaction.

As indicated, however, this procedure is unsuited to gaseous hydrocarbon feedstock, coal gasification stream, or natural gas treatment since no provision is made for $CO_2$ removal. More importantly, the use of oxygen with the materials contemplated would be intolerable. Finally, the amounts of chelate employed according to the above patent specification are merely catalytic, and do not give the desired degree of $H_2S$ removal from gaseous streams.

Similarly, U.S. patent specification 3,622,273 discloses the removal of $H_2S$ from a gaseous mixture by contacting the gaseous mixture with a solution containing, by weight, from 0.005 to 20 per cent of a ferric ion complex, from 25.0 to 99.945 per cent of water, and from 0.05 to 10.0 per cent of a buffering agent comprising an alkali metal carbonate or alkali metal hydrogen carbonate. According to this patent specification, known complexing agents, such as nitrilotriacetic acid and ethylenediaminetetraacetic acid, present stability problems when employed in $H_2S$ removal. To overcome these problems, the patent specification specifies the addition of a buffer to the treating solution, in the amount and type indicated previously. The ferrous complex resulting from reaction of the ferric complex with the $H_2S$ may be regenerated separately and reused indefinitely.

U.S. patent specification 4,091,073 describes a process in which $H_2S$ and $CO_2$ are simultaneously removed from a variety of gaseous streams. The sour gaseous stream is contacted with a solution of the Fe(III) chelate of N-(2-hydroxyethyl)ethylene-diaminetriacetic acid in a $CO_2$-selective solvent. The hydrogen sulphide is converted to sulphur, the $CO_2$ is absorbed to produce a purified gas stream, and the Fe(III) chelate is converted to

the Fe(II) chelate. The process includes sulphur removal and simultaneous regeneration of the solvent and the Fe(III) chelate.

It is an object of the present invention to remove $H_2S$, $CO_2$ and COS in an efficient manner from sour gaseous streams containing these three contaminants.

Accordingly, the invention provides a process for the removal of $H_2S$, $CO_2$ and COS from a sour gaseous stream containing $H_2S$, $CO_2$ and COS, which process comprises the following steps:-

a) contacting the sour gaseous stream with a lean $CO_2$- and COS-selective absorbent mixture containing a reactant oxidizing $H_2S$ to sulphur;

b) separating a sweet gaseous stream from an absorbent admixture containing absorbed $CO_2$, absorbed COS, solid sulphur and a reduced reactant;

c) stripping the absorbent admixture separated in step b), with formation of a gaseous stream comprising $CO_2$ and COS and a stripped absorbent admixture containing solid sulphur and a reduced reactant;

d) contacting the gaseous stream separated in step c) and comprising $CO_2$ and COS in the presence of water with a catalyst causing hydrolysis of COS and separating a $CO_2$- and $H_2S$-containing gaseous stream from the catalyst, and

e) removing $H_2S$ from the gaseous stream separated in step d).

Step e), the removal of $H_2S$ from the gaseous stream separated in step d), may be carried out in any suitable manner. In one suitable embodiment, the $H_2S$ in the gaseous stream separated in step d) is contacted with reactant solution in a manner similar to that in which the main quantity of $H_2S$ has been removed previously in step a). For example, the gaseous stream separated in step d) is contacted in step e) with an aqueous solution containing a reactant oxidizing $H_2S$ to sulphur and a purified gas is separated from a sulphur-containing aqueous mixture containing reduced reactant. According to a preferred embodiment of the invention the gaseous stream

separated in step d). is contacted in step e) with a lean $CO_2$- and COS-selective absorbent mixture containing a reactant oxidizing $H_2S$ to sulphur and a purified gas is separated from an absorbent admixture containing absorbed $CO_2$, solid sulphur and reduced reactant. The reactants oxidizing $H_2S$ to sulphur which are used in steps a) and e) may be different but are preferably the same. In another embodiment, an absorption-desorption system may be used in step e), the recovered $H_2S$ being treated as desired.

The absorbent admixture separated in step b) may be discarded, if desired, but for economical reasons the process according to the present invention preferably comprises the following additional steps:-

f) regenerating the absorbent admixture stripped in step c) by contacting this admixture with an oxygen-containing gas, and

g) removing sulphur from the stripped absorbent admixture before the regeneration thereof in step f) or from absorbent admixture after it has been regenerated in step f).

The absorbent admixture regenerated in step f) may be used in any suitable manner; preferably, the process according to the invention is operated as a cyclic procedure by using at least a portion of the regenerated reactant absorbent admixture from step f) as lean absorbent mixture in step a).

If the absorbent mixtures which have been used in steps a) and e) are the same they may be regenerated separately, but they are preferably regenerated together.

According to a very attractive embodiment of the invention at least a portion of the regenerated reactant absorbent admixture from step f) is used as lean absorbent mixture in step e). The absorbent admixture containing absorbed $CO_2$, solid sulphur and reduced reactant then separated in step e) may be used in any suitable manner; preferably at least a

portion thereof is used as lean absorbent mixture in step a). The balance of the absorbent admixture separated in step e) may be regenerated in step f) together with the absorbent admixture stripped in step c). The portion of the regenerated reactant absorbent admixture employed as lean absorbent mixture in step e) is preferably a minor portion.

The sulphur formed in the process according to the invention may be removed in any suitable manner. As stated above, it may be removed from the stripped absorbent admixture before the regeneration thereof in step f) or from absorbent admixture after it has been regenerated in step f). If a lean $CO_2$- and COS-selective absorbent mixture containing a reactant oxidizing $H_2S$ to sulphur or an aqueous solution containing a reactant oxidizing $H_2S$ to sulphur is used in step e), the sulphur may be removed from the solution separated in step e) from the purified gas. According to a preferred embodiment of the invention the portion of the absorbent admixture which has been employed in step e) is combined with that portion of the regenerated absorbent admixture from step f) which has not been used in step e) and sulphur is removed from the combined admixtures thus obtained, yielding absorbent admixture which is used as lean mixture in step a). Alternatively, the sulphur from step e) may be removed separately, or passed on to the contacting of step a) for "subsequent" removal.

Alternatively, the $H_2S$ is removed in step e) by contacting the gaseous stream separated in step d) with an absorbent for $H_2S$, followed by separation of a purified gas from an $H_2S$-containing absorbent. If large quantities of $CO_2$ are present, the absorbents are suitably $H_2S$-selective, and the absorption is operated in such a manner that selectivity is achieved. After absorption of the $H_2S$, the "loaded" absorbent is separated from the purified gas and the $H_2S$ is stripped from the loaded absorbent, the absorbent being regenerated with formation of an $H_2S$-rich gas and the "lean" absorbent thus formed is returned for re-use in step e), and the $H_2S$ is

disposed of. Preferably, the $H_2S$-rich gas is returned to step a) for reaction to sulphur, but this gas may be given any suitable destination. Solvents, pressures, temperatures, etc. for this type of procedure are known and well understood by those skilled in the art, and may readily be adjusted to provide optimum results. For example, those solvents and conditions, etc. described in U.S. patent specification 3,347,621 and U.S. patent specification 4,085,192, both incorporated herein by reference, may be utilized. Mixtures of such solvents or absorbents also may be used.

Sulphur removal from solution may be accomplished by means such as extraction, liquid flotation, filtration, or use of a hydrocyclone, etc.

In the first step of the process, the gaseous stream to be treated is contacted with an absorbent mixture containing a reactant oxidizing $H_2S$ to sulphur. Any suitable oxidizing reactant may be utilized. Particularly suitable reactants include polyvalent metal ions (and mixtures thereof), such as iron, vanadium, copper, manganese, and nickel, and include polyvalent metal chelates (and mixtures thereof), and mixtures of the ions and the chelates. As used herein, unless otherwise inconsistent with the intent expressed, the term "mixtures thereof", in referring to the reactants indicated, includes mixtures of the polyvalent metal ions, mixtures of the polyvalent metal chelates, and mixtures of polyvalent metal ions and polyvalent metal chelates. Preferred reactants are coordination complexes in which polyvalent metals form chelates with an acid having the general formula:-

$$(X)_{3-n}-N-(Y)_n$$

wherein n is an integer in the range from 1 to 3; Y represents a carboxymethyl or 2-carboxy-ethyl group and X a 2-hydroxyethyl or 2-hydroxypropyl group or an alkyl group having from 1 to 4 carbon atoms;

or with an acid having the general formula:-

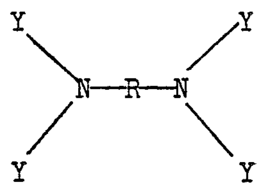 wherein:

- from 2 to 4 of the groups Y represent carboxymethyl or 2-carboxyethyl groups
- from 0 to 2 of the groups Y represent a 2-hydroxyethyl or a 2-hydroxypropyl group or a group having the general formula:

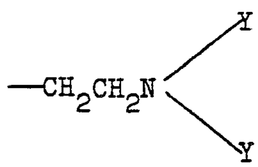

in which Y represents a carboxymethyl, 2-carboxyethyl, 2-hydroxyethyl or 2-hydroxypropyl group,

and

- R represents an ethylene, a trimethylene, 1-methylethylene, 1,2-cyclohexylene or 1,2-benzylene group;

or with a mixture of such acids.

Any polyvalent metal may be used, but iron, copper and manganese are preferred, particularly iron. The polyvalent metal should be capable of oxidizing hydrogen sulphide, while being reduced itself from a higher to a lower valence state, and should then be oxidizable by oxygen from the lower valence state to the higher valence state in a typical redox reaction. Other polyvalent metals which can be used include lead, mercury, palladium, platinum, tungsten, nickel, chromium, cobalt, vanadium, titanium, tantalum, zirconium, molybdenum and tin.

The polyvalent metal chelates are readily formed in aqueous solution by reaction of an appropriate salt, oxide or hydroxide of the polyvalent metal and the chelating agent in the acid form or an alkali metal or ammonium salt thereof. Exemplary chelating

agents include aminoacetic acids derived from ammonia (n is equal to 3) or 2-hydroxyalkylamines, such as aminoacetic acid (also referred to as "glycine"), iminodiacetic acid (also referred to as "diglycine"), nitrilotriacetic acid (NTA), a 2-hydroxyalkyl glycine; a dihydroxyalkyl glycine, and hydroxyethyl or hydroxypropyl diglycine; aminoacetic acids derived from ethylenediamine, diethylenetriamine, 1,2-propylenediamine, and 1,3-propylenediamine, such as ethylenediaminetetraacetic acid (EDTA), 2-hydroxyethylethylenediaminetriacetic acid (HEDTA), diethylenetriaminepentaacetic acid (DETPA); aminoacetic acid derivatives of cyclic 1,2-diamines, such as 1,2-diaminocyclohexane-N,N-tetraacetic acid, and 1,2-phenylenediamine-N,N-tetraacetic acid, and the amides of polyaminoacetic acids disclosed in U.S. patent specification 3,580,950. The Fe(III) chelates of NTA and HEDTA are preferred.

The amount of reactant compound, chelate, or mixture thereof, supplied is an effective amount, i.e., that amount sufficient to convert all or substantially all of the $H_2S$ in the gaseous stream, and will generally be on order of at least about one mol (basis polyvalent metal or chemical equivalent) per mol of $H_2S$. Ratios in the range of from about 2 mol to about 15 mol of compound or chelate per mol of $H_2S$ may be used, with ratios in the range of from about 2 mol per mol to about 5 mol of compound or chelate per mol of $H_2S$ being preferred. The manner of preparing the admixture is a matter of choice. For example, the compounds or chelates may be added to the absorbent, and, if necessary, then water added. Since some compounds and chelates have a significant solubility in given absorbents, and since water is produced by the reaction of the $H_2S$ and these reactants, precise amounts of water to be added, if added, cannot be given. Preferably, however, the reactant is added as an aqueous solution to the liquid absorbent. Where the reactant is supplied as an aqueous solution, the amount of reactant supplied may be about 20 per cent to about 80 per

cent by volume of the total absorbent admixture supplied to the adsorption of step a). Where iron chelates are utilized, the Fe(III) chelate solution will generally be supplied as an aqueous solution having a concentration of from about 0.1 molar to about 3 molar. A concentration of about 1 molar is preferred.

The particular type of gaseous stream treated is not critical, regardless of which embodiment of the invention is employed, as will be evident to those skilled in the art. Streams particularly suited to the process of the invention are naturally occurring gases, synthesis gases, process gases, and fuel gases produced by gasification procedures, e.g. gases produced by the gasification of coal, petroleum, shale, tar sands, etc. Particularly preferred are coal gasification streams, natural gas streams and refinery feedstocks composed of gaseous hydrocarbon streams, especially those streams of this type having low concentrations of $H_2S$ and $CO_2$. The term "hydrocarbon stream(s)", as employed herein, is intended to include streams containing significant quantities of hydrocarbon (both paraffinic and aromatic), it being recognized that such streams contain significant "impurities" not technically defined as a hydrocarbon. Again, streams containing principally a single hydrocarbon, e.g. ethane, are eminently suited to the process of the invention. Streams derived from the gasification and/or partial oxidation of gaseous or liquid hydrocarbon may be treated according to the invention. The $H_2S$ content of the type of streams contemplated will vary extensively, but, in general, will range from about 0.1 per cent to about 10 per cent by volume. $CO_2$ content may be similar, and may range from about 0.1 per cent to over 99 per cent by volume. COS content may also vary, but normally will range from about 0.01 per cent to about 1 per cent by volume. Obviously, the amount of $H_2S$, $CO_2$ and COS present is not generally a limiting factor in the process of the invention.

The temperatures employed in the contacting of step a) are not generally critical, except that higher temperatures appear to enhance decomposition of complexes employed. A relatively wide range of temperatures below the melting point of sulphur may be used, e.g. in the range of from 10°C to 80°C or even 110°C may be utilized, although a range of from about 20°C to about 60°C is preferred. In many commercial applications, such as the removal of $H_2S$ from natural gas to meet pipeline specifications, contact at ambient temperatures is preferred. Contact times may be in the range of from about 1 s to about 270 s, or longer, with contact times in the range of from 2 s to 120 s being preferred.

Similarly, in the regeneration of step f), temperatures may be varied widely. Preferably, the regeneration should be carried out as close as possible to the same temperature as the contacting of step a). If heat is added to strip or assist regeneration, cooling of the admixture is required before return of the admixture to the contacting in step a). In general, temperatures in the range of from about 10°C to 80°C, preferably 20°C to 60°C may be employed.

The pressure in step a) may vary widely, depending on the pressure of the gaseous mixture to be treated. For example, pressures in step a) may vary from 1 bar up to 152 or even 203 bar. Pressures in the range of from 1 bar to about 101 bar are preferred. In the regeneration of step f), pressures will be in the range of from about 1 bar to about 3 or 4 bar. The pressure-temperature relationships involved are well understood by those skilled in the art, and need not be detailed herein. Other conditions of operation for this type of reaction process, e.g., pH, etc. are further described in U.S. patent specification 3,068,065 and U.S. patent specification 4,009,251, which disclosures are incorporated herein by reference. Preferably, if the iron chelate of nitrilotriacetic acid is used, pH in the process of the invention will range from

about 6 to about 7.5, and the molar ratio of the nitrilotriacetic acid to the iron is from about 1.2 to 1.4. The procedure is preferably conducted continuously.

As noted, the oxidizing reactant, especially the polyvalent metal compounds and polyvalent metal chelates, are supplied in an absorbent mixture. The absorbent or absorbents employed are those absorbents which have a high degree of selectivity in absorbing $CO_2$, COS (and preferably $H_2S$ as well) from the gaseous streams. Any of the known absorbents conventionally used (or mixtures thereof) which do not affect the activity of the reactant, and which exhibit sufficient miscibility or solvency for the reactant or reactant solution, may be employed. Here again, the particular absorbent chosen is a matter of choice, given these qualififations, and selection can be made by routine experimentation. For example, 3,6-dioxaoctanol (also referred to as "Carbitol" or "diethylene glycol monoethyl ether"), propylene carbonate, 2,5,8,11,14-pentaoxapentadecane (also referred to as "tetraethylene glycol-dimethyl ether"), N-methylpyrrolidone, tetrahydrothiophene 1,1-dioxide (also referred to as "sulfolane"), methyl isobutyl ketone, 2,4-pentanedione, 2,5-hexanedione, 2-hydroxy-2-methyl-4-pentanone (also referred to as "diacetone alcohol"), hexyl acetate, cyclohexanone, 4-methyl-3-penten-2-one (also referred to as "mesityl oxide"), and 4-methyl-4-methoxy-pentanone-2 may be used. Suitable temperature and pressure relationships for different $CO_2$, COS-selective absorbents are known, or can be calculated by those skilled in the art.

The reduced reactant is regenerated by stripping the absorbent admixture with an oxygen-containing gas. Examples of oxygen-containing gases are air, air enriched with oxygen and pure oxygen. The stripping with an oxygen-containing gas accomplishes two functions, the stripping of any residual $CO_2$ (if originally present) and the oxidation of the reduced reactant to its higher oxidation state. The oxygen (in whatever form supplied) is supplied in a stoichiometric excess with

respect to the amount of reduced reactant present in the mixture. Preferably, the oxygen is supplied in an amount in the range of from about 1.2 to about 3 times excess.

As indicated, the absorbent mixture, after reaction of the $H_2S$ to produce sulphur and absorption of COS, is treated separately in step c) to remove COS. This is accomplished by stripping the COS from the absorbent mixture, and may be accomplished in any suitable fashion. The $CO_2$ absorbed will also be desorbed at this time. For example, the "loaded" absorbent mixture may be heated, or subjected to reduced pressure, or both, or stripped with a suitable gas, such as air. In any event, the COS, after desorption, must be treated since it cannot be vented. To this end, the COS is contacted in step d), in the gas phase, in the presence of water, for hydrolysis of the COS. The hydrolysis of COS is shown by the following formula:

$$COS + H_2O \longrightarrow H_2S + CO_2$$

In general, the contacting of the gas stream of COS with the reactant-absorbent mixture in step a) often provides sufficient water, as vapour, for the hydrolysis of the COS, although additional water may be added if the COS concentration is high.

Any catalyst demonstrating activity for this reaction may be employed. Preferred catalysts are Ni, Pd, Pt, Co, Rh or In. In general, most of these materials will be provided as solids deposited on a suitable support material, preferred amorphous support materials being the aluminas, silica aluminas, and silica. Crystalline support materials such as the aluminosilicates, known as molecular sieves (zeolites), synthetic or natural, may also be used. The selection of the particular catalyst (and support, if employed) are within the skill of those working in the field. Platinum on alumina is preferred.

The temperatures employed in the hydrolysis of step d) are not critical, except in the sense that the temperatures employed will allow substantially complete conversion of the COS. Temperatures will be in the range of from about 50°C to

about 150°C or even about 200°C, although a range of from about 50°C to about 150°C is preferred. As noted previously, in many commercial applications, such as the removal of $H_2S$, $CO_2$ and COS from natural gas to meet pipeline specifications, contact at ambient temperatures or as close to ambient temperatures as possible are preferred. Those skilled in the art may adjust the temperatures, as needed, to provide efficient reaction temperatures. Contact times will be in the range from about 0.5 s to about 10 s, with contact times in the range of from 1 s to 3 s being preferred. Pressures employed in the hydrolysis zone may be atmospheric, below atmospheric, or greater than atmospheric.

In accordance with the invention, the $H_2S$ produced from the COS hydrolysis is removed in one of two ways. If a lean $CO_2$- and COS-selective absorbent mixture containing a reactant oxidizing $H_2S$ to sulphur is employed in step e), temperatures, pressures, etc. will be similar to those in step a), the principal difference between steps a) and e) being that the gaseous stream from which $H_2S$ has to be removed in step e) has normally a lower $H_2S$ content than the gaseous stream to be treated in step a). Preferably, the reactant solution employed is all or part of the regenerated solution from the regeneration in step f). As described above, the sulphur produced may be removed, as desired.

An absorption column might comprise two separate columns in which the solution from the lower portion of the first column would be introduced into the upper portion of the second column, the gaseous material from the upper portion of the first column being fed into the lower portion of the second column. Parallel operation of units is of course well within the scope of the invention.

Again, as will be understood by those skilled in the art, the solutions or mixtures employed may contain other materials or additives for given purposes. For example, U.S. patent

specification 3,933,993 discloses the use of buffering agents, such as phosphate and carbonate buffers. Similarly, U.S. patent specification 4,009,251 describes various additives, such as sodium oxalate, sodium formate, sodium thiosulphate, and sodium acetate, which may be beneficial.

In order to describe the invention with greater particularity, reference is made to the accompanying schematic drawing. Figure 1 illustrates the broad removal approach of the invention. Figure 2 and Figure 3 illustrate differing concepts of removal of $H_2S$ produced by hydrolysis of COS. All values are merely exemplary or calculated, and similar number designations represent similar features.

In Figure 1, a gaseous stream, such as a natural gas stream containing 1% by volume of $H_2S$, 1.5% by volume of $CO_2$, and 0.1% by volume of COS, enters a contactor 1 via a line 2. The contactor 1 is a tray contactor, although any suitable contacting device (such as a venturi) may be employed. An oxidizing reactant absorbent mixture, e.g., a mixture comprising 45% by volume of water and iron chelate and 55% by volume of sulfolane, the chelate being present in an amount to provide a 0.4 molar mixture of the Fe(III) complex of 2-hydroxyethylethylenediaminetriacetic acid, enters the contactor 1 via a line 3. For illustrative purposes, it will be assumed that the gaseous stream enters at 5664000 $Nm^3$ per hour, while the reactant-absorbent mixture enters at 75700 $m^3$ per hour. Pressure of the gas in the line 2 is 70 bar, and the temperature of the gas is 30°C. The reactant mixture is supplied at a temperature of 30°C. The countercurrent flow of liquid and gas, as illustrated, provides for good contact, reaction of the $H_2S$ in the gaseous stream to sulphur, and effective removal of COS from the gaseous stream. As will be understood, water and the Fe(II) complex or chelate of 2-hydroxyethylethylenediaminetriacetic acid are also produced by the reaction. Sweet gas is removed overhead via a line 4.

Reactant-absorbent mixture is removed from the contactor 1 via a line 5, and stripped of $CO_2$ and COS in a stripper 6. The $CO_2$ and COS are stripped by pressure reduction, and removed as a gaseous stream overhead. Upon exit from the stripper 6, the COS-containing gaseous stream, which is substantially free of $H_2S$, passes via a line 7 to a reactor 8 wherein it is contacted with a catalyst containing about one per cent Pt on activated alumina. The temperature of the exit of the reactor 8 is about 100°C, pressure about 14.8 bar, and total contact time in the reactor 8 is 2 s. In this illustration, sufficient water vapour is present from the contactor 1 so that water need not be added. Obviously, water may be added, if necessary. Substantially complete conversion of the COS may be achieved in the reactor 8.

From the reactor 8, gaseous stream, now containing $H_2S$ and additional $CO_2$ from the hydrolysis of COS, passes via a line 9 to an $H_2S$ removal zone 10. In the removal zone 10 a reactant solution or absorption-desorption system may be utilized, as set out more fully hereinafter. Purified gas is removed via a line 10a.

Concomitantly, the reactant solution in the stripper 6, now containing some reduced reactant, sulphur and additional water, is passed via a line 11 to a regenerator 12 where the solution is contacted with air supplied via a line 13 to regenerate the reduced reactant. The molar ratio of oxygen (in air) to Fe(II) complex is maintained at about 2 to 1, and temperature in the regenerator 12 is maintained at about 30°C. Regenerated solution is removed via a line 14, and may be returned, at least partly, to the contactor 1. Spent air is removed from the regenerator 12 via a line 14a. Sulphur removal is shown prior to regeneration, by filtration, in a separation device 15; the sulphur removed is discharged via a line 15a.

In Figure 2 a gaseous stream similar to that described with respect to Figure 1 enters the contactor 1 via the line 2 and is contacted with an absorbent mixture from the line 3 comprising 75 per cent by volume Carbitol and 25 per cent by volume chelate solution, the chelate being present in an amount to provide a mixture containing 0.2 molar Fe(III) chelate of nitrilotriacetic acid. Sweet gas is removed overhead via the line 4, and reactant-absorbent mixture is removed, as in the previous illustration, via the line 5. In the stripper 6, sufficient heat is supplied to desorb the bulk of the $CO_2$ and the COS as a gaseous stream via the line 7. The gaseous stream in the line 7 is contacted in the reactor 8 in the presence of water vapour with a catalyst comprising about one per cent Pt on activated alumina to hydrolyze the COS in the gaseous stream to $H_2S$ and $CO_2$. Temperatures, pressures, etc., are similar to those described in reference to Figure 1. In accordance with the invention, the gaseous stream, containing the hydrolysis products, passes via the line 9 to a "secondary" contactor 16 where it is contacted with a reactant-absorbent mixture to produce sulphur. While the contact procedure employed in the contactor 16, including the solution employed, may be quite independent from the contact procedure employed in "primary" contactor 1, it is much preferred that the reactant absorbent mixture be the same or similar, and that the mixture employed in the contactor 16 constitute the mixture utilized in the contactor 1, or be a portion thereof. Thus, e.g., the mixture employed in the contactor 16 may be the make-up for the contactor 1, may be the regenerated stream from a regenerator, may be merely a portion of the regenerated reactant solution from a regenerator, or any suitable combination thereof. What is important, simply, is that sufficient reactant (e.g., polyvalent metal ions or chelate) be present in the contactor 16 to convert the $H_2S$ in the stream supplied through the line 9 to sulphur. For purposes of this illustration, the reactant-absorbent mixture employed

is the regenerated solution containing the Fe(III) chelate of nitrilotriacetic acid to be employed in the primary contactor 1, as outlined more fully hereinafter. Accordingly, the reaction of the $H_2S$ and the Fe(III) chelate of nitrilotriacetic acid produces sulphur and the reduced chelate, but, because the content of $H_2S$ in the stream supplied via the line 9 is low, the mixture is quite suitable for use in the contactor 1. The contactor 16 is preferably operated under conditions to reject $CO_2$ if possible, via a line 17. However, the $CO_2$ absorbed is easily disposed of. If desired, the partially loaded absorbent mixture may be forwarded, via a line 18, to the primary contactor 1 and hence to the stripper 6, or, if some loss of $CO_2$ is acceptable, via a line 19 and the line 11 to the regenerator 12 where it is removed. Sulphur may or may not be removed prior to entry of the reactant absorbent mixture into the contactor 1.

Concomitantly, reactant-absorbent mixture, containing some Fe(II) chelate of nitrilotriacetic acid and sulphur, is forwarded via the line 11 to the regenerator 12. As shown in dotted line boxes, the sulphur may be removed prior to regeneration, after regeneration, or after exit from the contactor 16. Preferably, sulphur is removed after regeneration.

In the regenerator 12, oxygen is supplied, via the line 13, in molar excess. Preferably, the oxygen is supplied in air, in a ratio of about 2.0 or greater per mol of Fe(II) chelate in the mixture. Temperature of the mixture is preferably around 30°C, and pressure is suitably 2.7 bar. Regeneration in this manner has the added advantage of removing some water vapour, thus aiding in prevention of water build-up in the system and reducing bleed and make-up problems. It is not necessary that all of the Fe(II) chelate be converted.

Regenerated absorbent mixture, i.e., an absorbent mixture in which at least the bulk of the Fe(II) chelate has been converted to the Fe(III) chelate, is removed via the line 14.

As indicated, the mixture may be passed (all or part) to the contactor 16, or into a line 18 and through the line 3 to the contactor 1. Make-up reactant absorbent mixture may be supplied via a line 3a, if desired.

In the embodiment of Figure 3, the operation of units 1, 2, 4 through 9, and 11 through 13 is similar to that of corresponding units of the embodiments of Figures 1 and 2. However, the treatment of the $H_2S$ (and $CO_2$, if desired) from the hydrolysis is different, and the return of the regenerated reactant mixture is direct. Specifically, the gaseous stream in the line 9 enters an absorber 20 wherein it is contacted with an absorbent solution, e.g., an aqueous solution containing 2 molar diisopropanolamine. The absorber 20 is preferably a tray absorption column, although other types may be used. $H_2S$ is absorbed from the gaseous stream, $CO_2$ being rejected and exiting the absorber 20 via a line 21. Conditions for absorbing the $H_2S$ (and rejecting $CO_2$) are well known, and form no part of the invention. The $H_2S$-containing "loaded" absorbent exits the absorber 20 via a line 22, and passes to a stripping or a regeneration column 23 wherein the $H_2S$ is stripped from the absorbent, preferably by heat supplied as steam via a line 27. "Lean" absorbent is returned via a line 24 for re-utilization in the absorber 20, while $H_2S$ is removed via a line 25. The $H_2S$ in the line 25 may be discharged via a line 25a and treated in any suitable fashion, but is preferably returned to the contactor 1, either directly via the line 25, or via the lines 25, 25b and 2. If $CO_2$ has been absorbed to any extent, provision may also be made for its removal or recovery. Concomitantly, the regenerated reactant mixture from the regeneration column 12 is passed, via a line 26 and the line 3 to the contactor 1. Sulphur recovery may be made prior or subsequent to regeneration (shown as dotted line boxes).

## CLAIMS

1. A process for the removal of $H_2S$, $CO_2$ and COS from a sour gaseous stream containing $H_2S$, $CO_2$ and COS, which process comprises the following steps:-

a) contacting the sour gaseous stream with a lean $CO_2$- and COS-selective absorbent mixture containing a reactant oxidizing $H_2S$ to sulphur;

b) separating a sweet gaseous stream from an absorbent admixture containing absorbed $CO_2$, absorbed COS, solid sulphur and a reduced reactant;

c) stripping the absorbent admixture separated in step b) with formation of a gaseous stream comprising $CO_2$ and COS and a stripped absorbent admixture containing solid sulphur and a reduced reactant;

d) contacting the gaseous stream separated in step c) and comprising $CO_2$ and COS in the presence of water with a catalyst causing hydrolysis of COS and separating a $CO_2$- and $H_2S$-containing gaseous stream from the catalyst, and

e) removing $H_2S$ from the gaseous stream separated in step d).

2. A process as claimed in claim 1, which comprises the following additional steps:-

f) regenerating the absorbent admixture stripped in step c) by contacting this admixture with an oxygen-containing gas, and

g) removing sulphur from the stripped absorbent admixture before the regeneration thereof in step f) or from absorbent admixture after it has been regenerated in step f).

3. A process as claimed in claim 1 or 2, in which at least a portion of the regenerated reactant absorbent admixture from step f) is used as lean absorbent mixture in step a).

4. A process as claimed in any one of the preceding claims, in which the gaseous stream separated in step d) is contacted in step e) with a lean $CO_2$- and COS-selective absorbent mixture containing a reactant oxidizing $H_2S$ to sulphur and a purified gas is separated from an absorbent admixture containing absorbed $CO_2$, solid sulphur and reduced reactant.

5. A process as claimed in claim 4, in which at least a portion of the regenerated reactant absorbent admixture from step f) is used as lean absorbent mixture in step e).

6. A process as claimed in claim 4 or 5, in which at least a portion of the absorbent admixture which has been used in step e) is used as lean absorbent mixture in step a).

7. A process as claimed in claims 5 and 6, in which the portion of the regenerated reactant absorbent admixture employed as lean absorbent mixture in step e) is a minor portion.

8. A process as claimed in claim 6 or 7, in which the portion of the absorbent admixture which has been employed in step e) is combined with that portion of the regenerated absorbent admixture from step f) which has not been used in step e) and sulphur is removed from the combined admixtures thus obtained, yielding absorbent admixture which is used as lean mixture in step a).

9. A process as claimed in any one of claims 1 to 3, in which the gaseous stream separated in step d) is contacted in step e) with an aqueous solution containing a reactant oxidizing $H_2S$ to sulphur and a purified gas is separated from a sulphur-containing aqueous mixture containing reduced reactant.

10. A process as claimed in claim 1, in which the $H_2S$ is removed in step e) by contacting the gaseous stream separated in step d) with an absorbent for $H_2S$ and a purified gas is separated from an $H_2S$-containing absorbent.

11. A process as claimed in claim 10, in which the $H_2S$-containing absorbent is regenerated, simultaneously forming an $H_2S$-rich gas and regenerated absorbent is contacted in step e) with gaseous stream separated in step d).

12. A process as claimed in claim 11, in which the $H_2S$-rich gas is passed to step a) and converted to sulphur.

13. A process as claimed in any one of the preceding claims, in which the reactant oxidizing $H_2S$ to sulphur comprises one or more polyvalent metal ions and/or one or more polyvalent metal chelate compounds.

14. A process as claimed in claim 13, in which the reactant is a coordination complex of a polyvalent metal with an acid having the general formula:

$$(X)_{3-n}\text{-N-}(Y)_n$$

wherein n is an integer in the range of from 1 to 3, Y represents a carboxymethyl or 2-carboxyethyl group and X a 2-hydroxyethyl or 2-hydroxypropyl group or an alkyl group having in the range of from 1 to 4 carbon atons;

or with an acid having the general formula:-

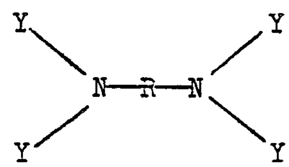

wherein:

- from 2 to 4 of the groups Y represent carboxymethyl or 2-carboxyethyl groups
- from 0 to 2 of the groups Y represent a 2-hydroxyethyl or a 2-hydroxypropyl group or a group having the general formula:-

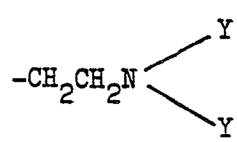

in which Y represents a carboxymethyl, 2-carboxyethyl, 2-hydroxyethyl or 2-hydroxypropyl group, and

- R represents an ethylene, a trimethylene, 1-methylethylene, 1,2-cyclohexylene or 1,2-benzylene group;

or with a mixture of such acids.

15. A process as claimed in claim 14, in which n is equal to 3.

16. A process as claimed in claim 14, in which the reactant is a coordination complex of a polyvalent metal with an aminoacetic acid derived from ethylenediamine.

17. A process as claimed in any one of claims 13 to 16, in which the polyvalent metal is iron.

18. A process as claimed in any one of claims 13 to 15, in which the reactant is a coordination complex of iron with nitrilotriacetic acid.

19. A process as claimed in any one of claims 13, 14 and 16, in which the reactant is a coordination complex of iron with 2-hydroxyethylethylenediaminetriacetic acid.

20. A process as claimed in claim 1, substantially as hereinbefore described with reference to the drawing.

21. Sulphur whenever removed by a process as claimed in any one of claims 2 to 20.

22. Gaseous mixtures from which $H_2S$, $CO_2$ and COS have been removed by a process as claimed in any one of claims 1 to 20.

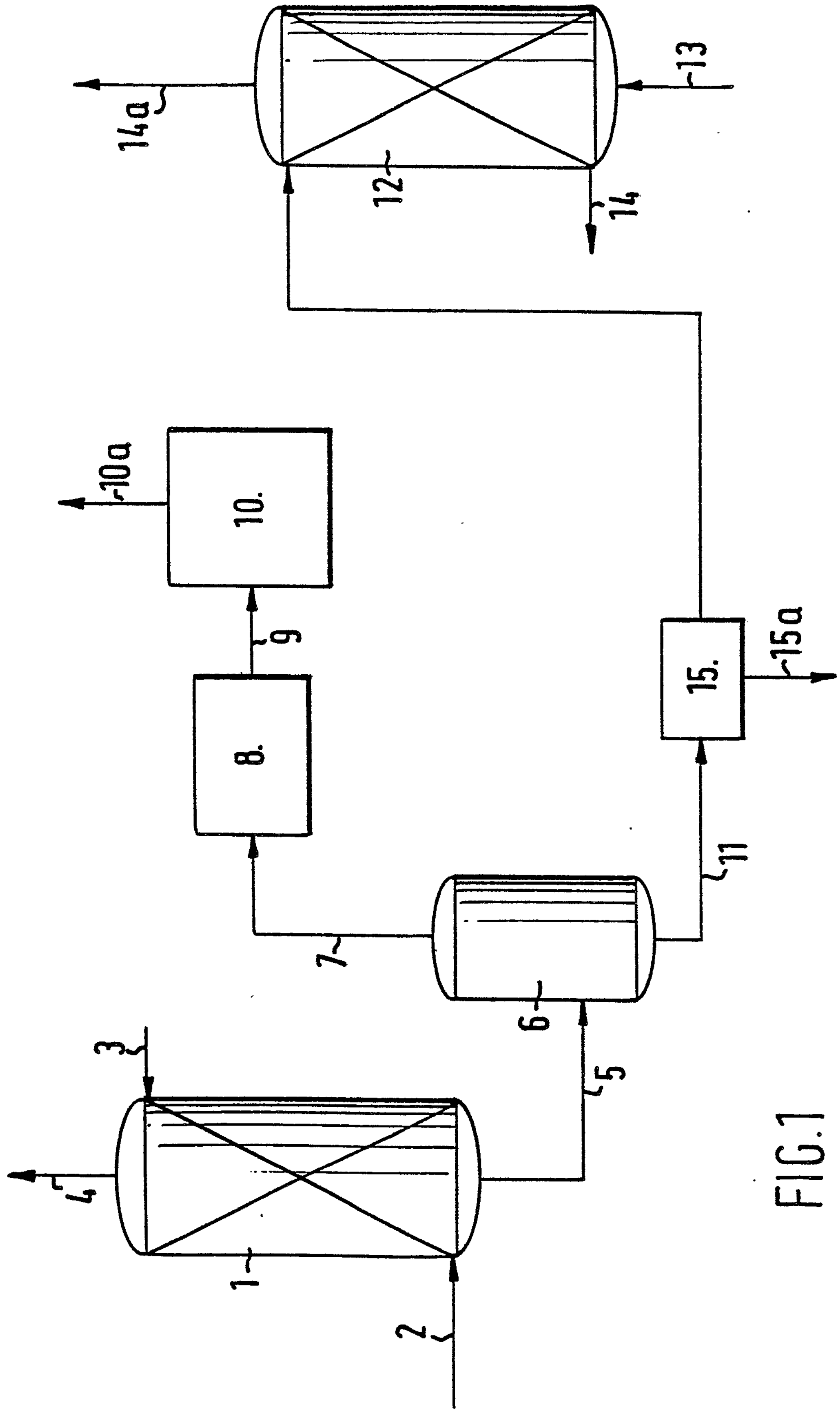


FIG.1

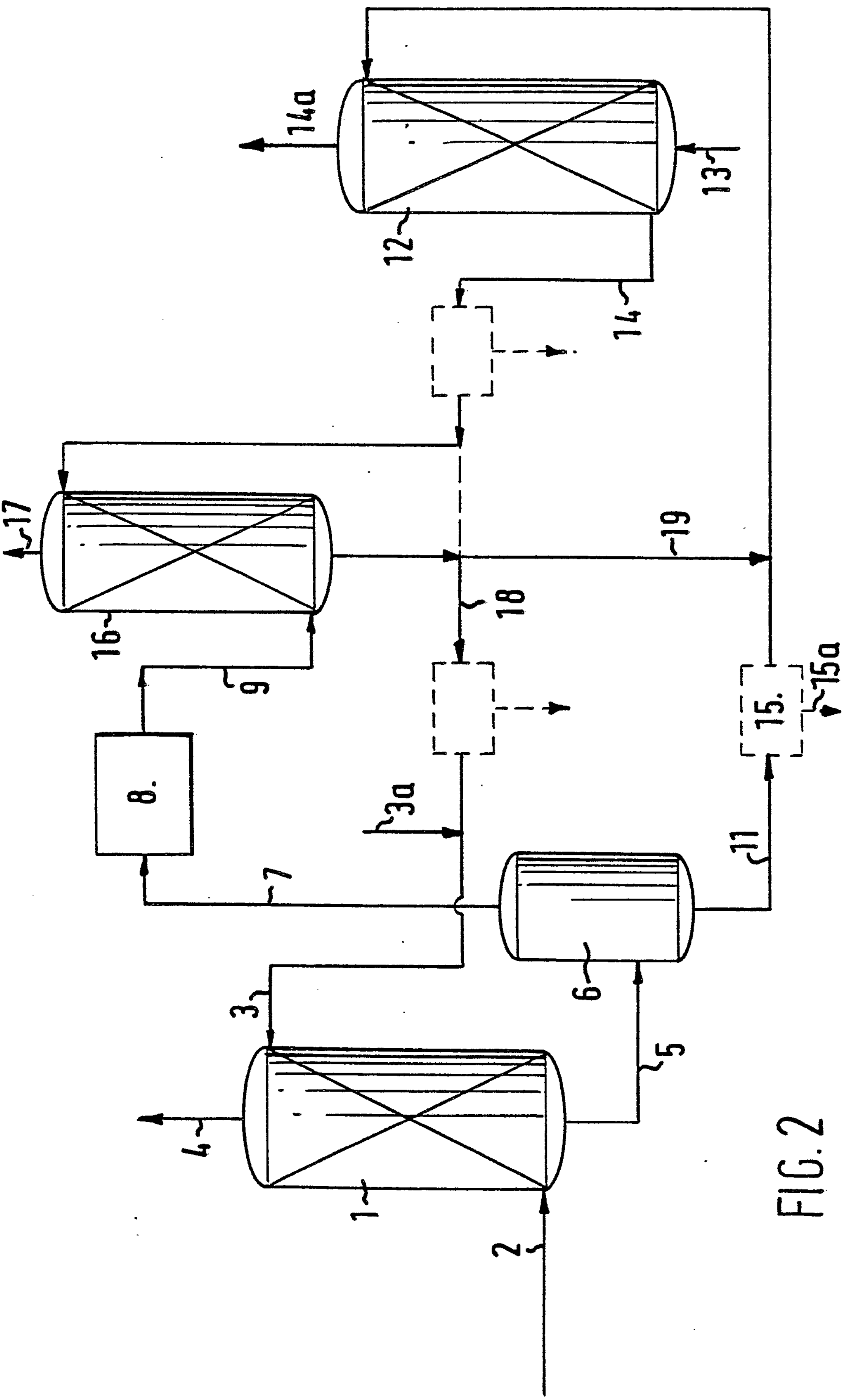


FIG. 2

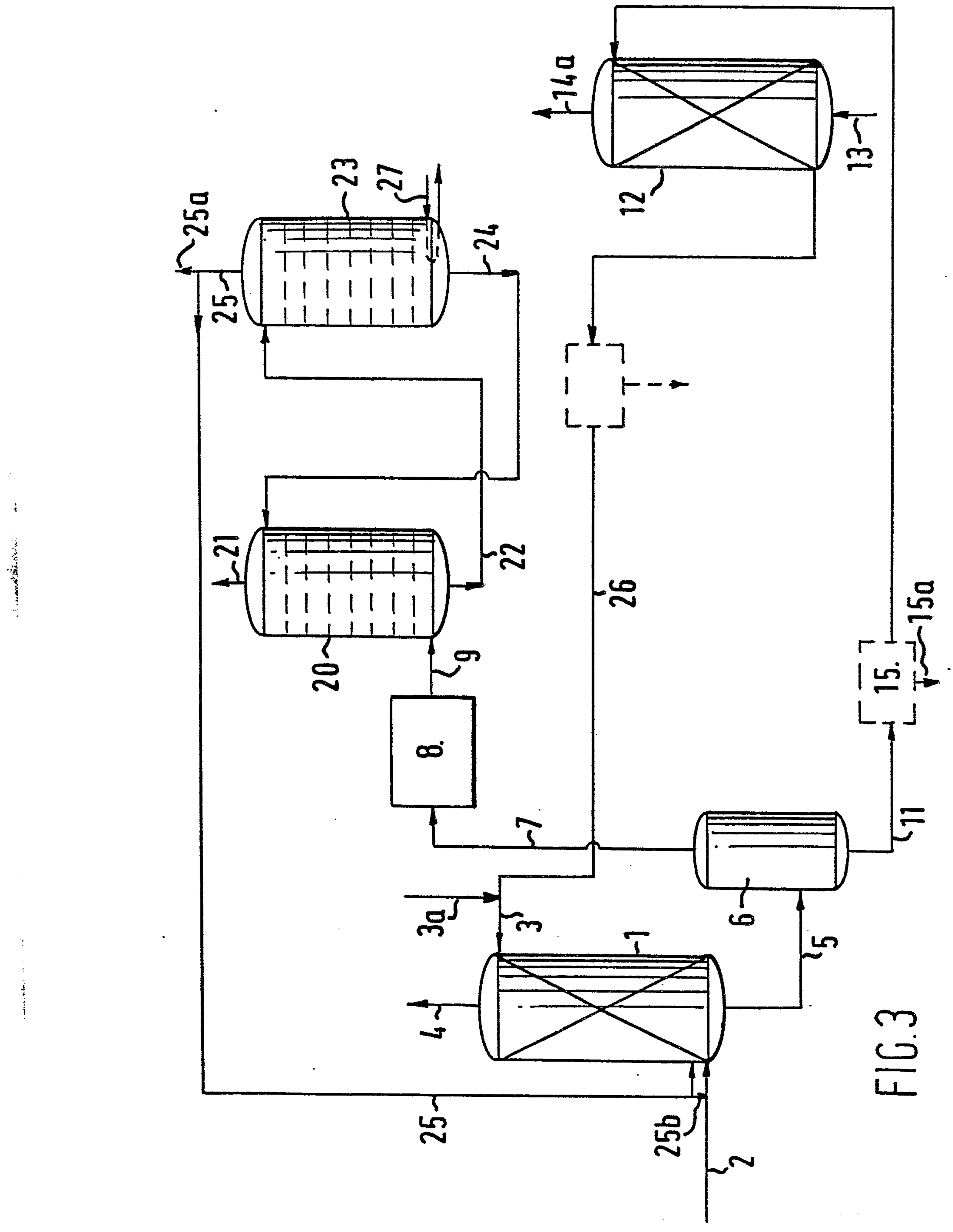


FIG.3